# FASCICULE DE BREVET EUROPEEN

(11) **EP 3 583 306 B1**
(45) Date de publication et mention de la délivrance du brevet: **03.12.2025**
(21) Numéro de dépôt: 18706795.4
(22) Date de dépôt: 05.02.2018
(51) Int. Cl.: F02C 7/262, F02C 7/275, F02C 7/32, B64C 27/12, F02C 3/10, F02C 7/36

(54) **SYSTÈME PROPULSIF D'UN HÉLICOPTÈRE MONOMOTEUR**
ANTRIEBSSYSTEM FÜR EINEN EINZELMOTORHELIKOPTER
PROPULSION SYSTEM FOR A SINGLE-ENGINE HELICOPTER

(30) Priorité: 15.02.2017 FR 1751235
(43) Date de publication de la demande: 25.12.2019
(73) Titulaire: Safran Helicopter Engines, 64510 Bordes (FR)
(72) Inventeur: THIRIET, Romain, 77550 Moissy-Cramayel (FR); SERGHINE, Camel, 77550 Moissy-Cramayel (FR); PUERTO, Alphonse, 77550 Moissy-Cramayel (FR); SARRAT, Christian, 77550 Moissy-Cramayel (FR)
(74) Mandataire: Gevers & Orès
(86) Numéro de dépôt international: PCT/FR2018/050282
(87) Numéro de publication internationale: WO 2018/150121

(56) Documents cités:
- US-A1- 2011 121 127
- US-A1- 2012 025 032
- US-A1- 2015 143 950

## Description

### DOMAINE TECHNIQUE

La présente invention concerne un système propulsif d'un hélicoptère monomoteur et plus particulièrement d'un système propulsif comprenant un moteur principal et un dispositif d'assistance.

### ETAT DE L'ART

Un hélicoptère monomoteur est un hélicoptère comprenant un système propulsif incluant un unique moteur principal, à savoir généralement un moteur à combustion interne et par exemple un turbomoteur, pour entraîner un rotor principal via une boîte de transmission principale dite BTP et un rotor arrière de queue (connu également sous l'acronyme RAC pour rotor anticouple) via la boîte de transmission arrière dite BTA.

Le système propulsif peut comprendre en outre un dispositif d'assistance de l'hélicoptère. Le dispositif d'assistance est utilisé en situation d'urgence afin d'apporter momentanément de la puissance à l'hélicoptère, et plus précisément aux rotors principal et arrière.

Un premier cas d'urgence est la panne du moteur principal. Dans cette situation, le pilote entame alors une procédure de vol dégradée connue sous les termes de vol en autorotation. Le dispositif d'assistance permet d'assister mécaniquement l'hélicoptère au cours du vol en autorotation, et notamment au cours des premières et/ou dernières phases de vol (réalisation du « flare » en amont de l'atterrissage). Un tel dispositif d'assistance permet ainsi de limiter significativement les dommages causés sur l'hélicoptère à la suite d'un tel vol en autorotation, au bénéfice notamment du temps d'immobilisation de l'hélicoptère.

Un deuxième cas d'urgence est un besoin immédiat de puissance supplémentaire lors par exemple d'un évitement d'obstacles ou d'une inversion de température en altitude.

Le document FR-A1-3019588 au nom de la demanderesse décrit différentes architectures d'intégration d'un dispositif d'assistance. Le dispositif d'assistance comprend une turbine d'entraînement en rotation d'un arbre, alimentée par un générateur de gaz à stockage solide et des moyens commandés d'alimentation de la turbine d'entraînement. La puissance mécanique de rotation de l'arbre est, dans le cas présent, utilisé pour entraîner le rotor principal de l'hélicoptère en introduisant cette puissance soit directement au niveau de la BTP, soit au niveau d'un arbre de transmission avant, soit au niveau d'un arbre d'une turbine libre du turbomoteur (moteur principal).

De tels systèmes propulsifs posent des problèmes d'encombrement. En effet, l'intégration d'un tel dispositif d'assistance dans un compartiment moteur d'ores et déjà compact engendre d'importantes modifications aussi bien au niveau de la cellule de l'hélicoptère qu'au niveau du moteur principal, et de la transmission de puissance entre le moteur principal et la BTP.

En outre, l'introduction de cette puissance sur la turbine libre du turbomoteur principal présente plusieurs inconvénients.

Un premier inconvénient est qu'en cas de panne d'alimentation en gaz de la turbine libre du turbomoteur principal, celle-ci ne produit plus de couple moteur et va décélérer très rapidement sous l'effet des pertes par frottements aérodynamiques. Ces pertes peuvent atteindre plusieurs dizaines de kilowatts (kW). On comprend ainsi que suivant les cas d'application cités ci-dessus à savoir panne du moteur principal ou besoin immédiat de puissance supplémentaire pour éviter un obstacle, la puissance motrice effectivement vue par le rotor principal est différente, ce qui pourrait surprendre le pilote de l'hélicoptère.

Un deuxième inconvénient est qu'en injectant la puissance d'assistance via la turbine libre, il n'est pas possible de fournir cette puissance d'assistance aux boîtes de transmission principale et arrière en cas de pannes de la dite turbine libre et/ou des composants du turbomoteur mécaniquement en aval, et notamment le réducteur du turbomoteur pour des turbomoteurs équipés d'un tel réducteur.

Un troisième inconvénient est qu'il faut prévoir une interface spécifique sur le turbomoteur pour permettre l'injection de cette puissance d'assistance sur la turbine libre.

L'art antérieur comprend également les documents US-A1-2012/025032, US-A1-2015/143950 et US-A1-2011/121127.

L'objectif de la présente invention est ainsi de proposer un système propulsif d'un hélicoptère monomoteur comprenant un dispositif d'assistance permettant de remédier aux inconvénients précités.

### EXPOSE DE L'INVENTION

L'invention propose à cet effet un système propulsif d'un hélicoptère monomoteur selon la revendication 1.

Un tel système propulsif implique peu de modifications sur le moteur principal (par exemple un turbomoteur), et de manière générale sur l'hélicoptère. En outre, un tel système propulsif permet de faciliter le montage et la maintenance du dispositif d'assistance. Enfin, l'intégration du dispositif d'assistance sur le moteur principal permet de minimiser la masse totale de l'hélicoptère.

Par ailleurs l'intégration du dispositif d'assistance au plus près du moteur principal limite les impacts d'un déplacement du centre de gravité du système propulsif.

Enfin, l'introduction de puissance sur l'arbre de transmission arrière, et ainsi cinématiquement en aval d'une roue libre de puissance, permet de remédier aux inconvénients mentionnés ci-dessus en lien avec l'introduction de puissance sur une turbine libre d'un turbomoteur.

Le système propulsif selon l'invention peut comprendre une ou plusieurs des caractéristiques suivantes, prises isolément les unes des autres ou en combinaison les unes avec les autres :
- ledit boîtier de transmission comprend un premier réducteur et/ou une première roue libre configurée pour transmettre la puissance générée par ledit dispositif propulsif audit arbre de transmission arrière ;
- ledit boîtier de transmission comprend des moyens de mesure de la vitesse de rotation dudit dispositif propulsif et/ou dudit arbre de transmission arrière ;
- ledit boîtier de transmission comprend les interfaces suivantes :
   - une première interface couplée au dispositif propulsif ;
   - une deuxième interface couplée à une première portion dudit arbre de transmission arrière, ladite première portion étant liée mécaniquement au moteur principal ;
   - une troisième interface couplée à une seconde portion dudit arbre de transmission arrière, ladite seconde portion étant liée mécaniquement à ladite BTA ;
- ladite première portion dudit arbre de transmission arrière est liée à une seconde roue libre relié à un second réducteur qui est lui-même connecté mécaniquement audit moteur principal ;
- le moteur principal est un moteur à combustion interne, et de préférence un turbomoteur.

L'invention a pour deuxième objet un hélicoptère comprenant un système propulsif tel que décrit précédemment.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique d'un hélicoptère monomoteur comprenant un système propulsif selon l'invention ;
- la figure 2 est une vue de détail d'un dispositif d'assistance du système propulsif selon l'invention ;
- la figure 3 est une vue arrière en perspective du système propulsif selon l'invention.

### DESCRIPTION DETAILLEE

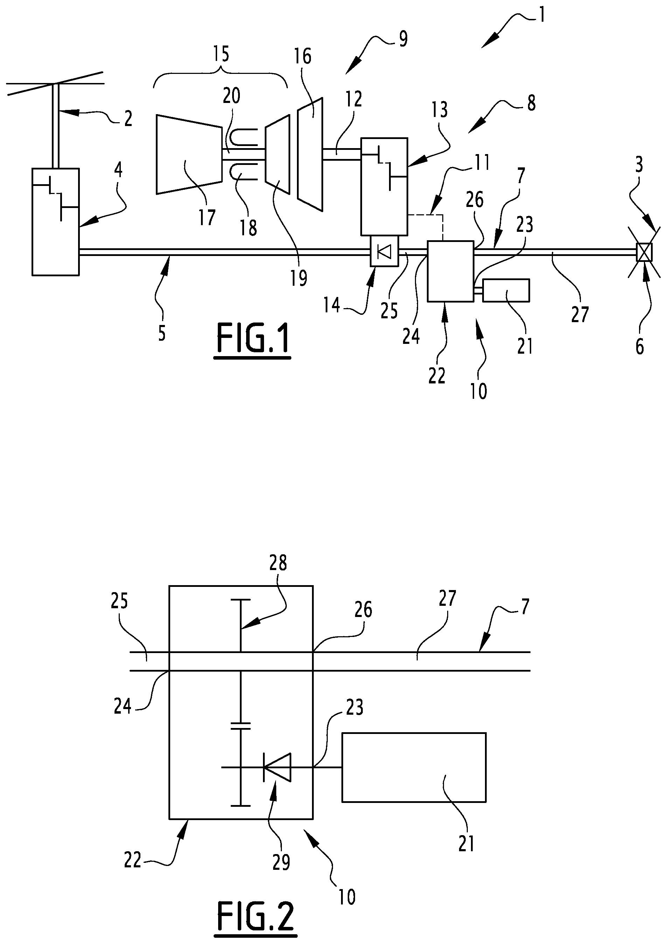

Sur la figure 1 est représenté schématiquement un hélicoptère 1 monomoteur comprenant un rotor principal 2 entraînant une voilure tournante et un rotor arrière 3 communément appelé rotor anticouple (RAC).

Plus précisément, le rotor principal 2 est entraîné par une boîte de transmission principale 4 dite BTP 4 (ci-après dénommée BTP) qui est elle-même entraînée par un arbre de transmission avant 5 (également appelé arbre de transmission principal 5). De la même manière, le rotor arrière 3 est entraîné par une boîte de transmission arrière 6 dite BTA 6 (ci-après dénommée BTA) qui est elle-même entraînée par un arbre de transmission arrière 7. Dans le cas présent, les arbres de transmission avant et arrière 5, 7 sont sensiblement coaxiales.

L'hélicoptère 1 comprend en outre un système propulsif 8 comportant un moteur principal 9 et un dispositif d'assistance 10 utilisé en situation d'urgence afin d'apporter momentanément de la puissance à l'hélicoptère 1, et plus précisément aux rotors principal et arrière 2, 3. Le dispositif d'assistance 10 est fixé au moteur principal 9 via des moyens de fixation 11.

Le système propulsif 8 est configuré pour que le dispositif d'assistance 10 puisse entraîner mécaniquement les BTA et BTP 6, 4 par introduction de puissance sur l'arbre de transmission arrière 7, et notamment en situation d'urgence.

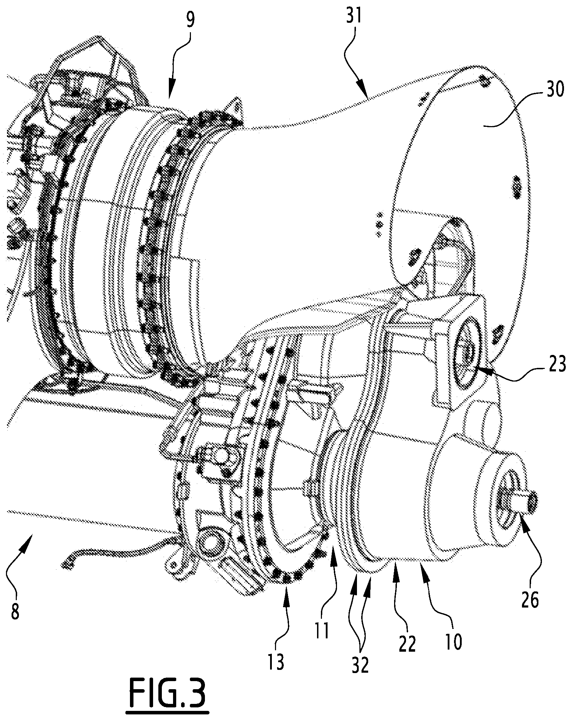

Selon le mode de réalisation illustré sur les figures 1 et 3, le moteur principal 9 comprend un arbre de sortie 12 relié mécaniquement aux arbres de transmission avant et arrière 5, 7 via un premier réducteur 13 puis une première roue libre 14, dite propulsive.

On note que dans la présente invention, les termes « avant » et « arrière » associés aux arbres de transmission 5, 7 sont exprimés en fonction de la première roue libre 14.

Tel qu'illustré sur les figures 1 et 3, le moteur principal 9 est ici un turbomoteur formé d'un générateur de gaz 15 et d'une turbine libre 16 sur laquelle est fixé l'arbre de sortie 12. Le générateur de gaz 15 comprend de manière connue au moins un compresseur 17 d'air alimentant une chambre de combustion 18 d'un carburant dans l'air comprimé qui délivre des gaz chauds à au moins une turbine de détente 19 des gaz qui entraîne en rotation le compresseur 17 via un arbre d'entraînement 20. Les gaz entraînent ensuite la turbine libre 16 de transmission de puissance. En variante, de manière générale, le moteur principal 9 peut correspondre à tout type de moteur à combustion interne.

Tel qu'illustré sur les figures 1 et 3, le dispositif d'assistance 10 est ici fixé au premier réducteur 13 via les moyens de fixation 11 (représentés en pointillés sur la figure 1) tels qu'un assemblage par boulons via des collerettes extérieures. Le dispositif d'assistance 10 se trouve à l'aplomb d'une bouche 30 de sortie d'une tuyère 31 au travers de laquelle les gaz chauds s'échappent. Le dispositif d'assistance 10 est intégré (physiquement) au turbomoteur 9, et autrement dit le dispositif d'assistance 10 et le turbomoteur 9 forment un unique bloc.

Le premier réducteur 13 permet d'abaisser la vitesse de rotation de l'arbre de sortie 12.

La première roue libre 14 est configurée notamment pour :
- permettre la transmission de mouvement à la BTP 4 lorsque le dispositif d'assistance 10 impose une vitesse de rotation d'arbre supérieure à celle imposée par le vol en autorotation, lors par exemple d'une panne du moteur principal 9 ;
- permettre la transmission de mouvement à la BTP 4 lorsque le dispositif d'assistance 10 impose une vitesse de rotation d'arbre (du réducteur 13 à la BTP et non l'inverse) supérieure à celle imposée par le moteur principal 9.

Le dispositif d'assistance 10 comprend un dispositif propulsif 21 comprenant des moyens pyrotechniques et/ou électrotechniques et/ou électriques et/ou hydrauliques et/ou pneumatiques.

Le dispositif d'assistance 10 peut comprendre des moyens pyrotechniques tels que présentés dans les documents FR-A1-3019588 ou FR-A1-3019524. Le dispositif d'assistance 10 peut comprendre des moyens hydrauliques tels que présentés dans le document FR-A1-3019221 ou dans le document FR1653789. Le dispositif d'assistance peut comprendre des moyens pneumatiques tels que présentés dans le document FR-A1-3024180.

Le dispositif d'assistance 10 est relié mécaniquement à l'arbre de transmission arrière 7.

Plus précisément, selon le mode de réalisation illustré sur les figures 1 à 3, le dispositif propulsif 21 est relié mécaniquement à l'arbre de transmission arrière 7 par l'intermédiaire d'un boîtier de transmission 22.

Le boîtier de transmission 22 comprend les interfaces suivantes :
- une première interface 23 couplée au dispositif propulsif 21 ;
- une deuxième interface 24 couplée à une première portion 25 de l'arbre de transmission arrière 7, la première portion 25 étant liée mécaniquement à la première roue libre 14 ;
- une troisième interface 26 couplée à une seconde portion 27 de l'arbre de transmission arrière 7, la seconde portion 27 étant liée mécaniquement à la BTA 6.

Avantageusement, le fait de diminuer la longueur de l'arbre de transmission arrière 7 ne pénalise pas la dynamique de ligne d'arbre.

Les première et seconde portions 25, 27 de l'arbre de transmission 7 sont sensiblement coaxiales. Chaque interface 23, 24, 26 du boîtier de transmission 22 est par exemple bridée à l'organe correspondant pour permettre la transmission de puissance.

La figure 2 décrit le boîtier de transmission 22 qui comprend un second réducteur 28 et une seconde roue libre 29 configurée pour transmettre la puissance générée par le dispositif propulsif 21 à l'arbre de transmission arrière 7.

Selon le mode de réalisation de la figure 3, le boîtier de transmission 22 est réalisé en deux parties assemblées l'une par rapport à l'autre via deux ceintures 32 périphériques mises bout à bout et maintenues en position via des moyens de fixation non représentés.

Dans le cas présent, tel qu'illustré sur la figure 2, la puissance fournie par le dispositif d'assistance 10 est transmise à l'arbre de transmission arrière 7 via la seconde roue libre 29 puis le second réducteur 28.

En variante, la puissance fournie par le dispositif d'assistance 10 pourrait être transmise à l'arbre de transmission arrière 7 via le second réducteur 28 puis la seconde roue libre 29.

Lorsque l'hélicoptère 1 fonctionne normalement (moteur principal 9 en fonctionnement uniquement), la seconde roue libre 29 permet de ne pas entraîner intempestivement le dispositif propulsif 21 au bénéfice notamment de la durée de vie de ce dernier. Le dispositif d'assistance 10 est ainsi indépendant du moteur principal 9.

Le second réducteur 28 permet d'adapter la vitesse de rotation de l'arbre de transmission arrière 7 à celle imposée par le dispositif propulsif 21.

Le boîtier de transmission 22 comprend des moyens de mesure de la vitesse de rotation des arbres à l'intérieur du boîtier 22, et par exemple du dispositif propulsif 21 et/ou de l'arbre de transmission arrière 7. Ces moyens de mesure permettent d'évaluer à chaque instant et dans toutes les situations de vol, la vitesse de rotation des rotors principal et arrière 2, 3.

Dans le cas présent, le second réducteur 28 comprend un unique train à un engrenage. Mais cet exemple n'est en rien limitatif, le second réducteur 28 pourrait comprendre par exemple plusieurs trains d'engrenages par exemple à denture droite et/ou un ou plusieurs trains épicycloïdaux, en fonction de la réduction nécessaire.

En variante, plusieurs dispositifs propulsifs 21 sont couplés au boîtier de transmission 22.

En fonctionnement normal, le moteur principal 9 fournit la totalité de la puissance nécessaire pour entraîner les BTP et BTA 4, 6, et par voie de conséquence les rotors principal et arrière 2, 3. La puissance fournie par le moteur principal 9 est transmise en sortie du premier réducteur 13 par l'intermédiaire de la première roue libre 14 aux arbres de transmission avant et arrière 5, 7.

En situation d'urgence, lors par exemple d'une panne du moteur principal 9, le dispositif d'assistance 10, via un apport de puissance sur l'arbre de transmission arrière 7, permet d'accroître momentanément les vitesses de rotation des arbres de transmission avant et arrière 5, 7, et par voie de conséquence des rotors principal et arrière 2, 3. La transmission de puissance depuis le dispositif d'assistance 10 jusqu'à la BTP 4 est possible grâce à la première roue libre 14.

## Revendications

1. Système propulsif (8) d'un hélicoptère (1) monomoteur comprenant :
• un moteur principal (9) relié à un arbre de transmission avant (5) et un arbre de transmission arrière (7) du système propulsif (8), les arbres de transmission avant et arrière (5, 7) étant respectivement aptes à entraîner une boîte de transmission principale (4) dite BTP (4) et une boîte de transmission arrière (6) dite BTA (6) ;
• un dispositif d'assistance (10) comprenant un dispositif propulsif (21) qui comprend des moyens pyrotechniques et/ou électrotechniques et/ou électriques et/ou hydrauliques et/ou pneumatiques ;
**caractérisé en ce que** ledit système propulsif (8) est configuré pour que le dispositif d'assistance (10) puisse entraîner mécaniquement lesdites BTA et BTP (6, 4) par introduction de puissance sur ledit arbre de transmission arrière (7), ledit dispositif d'assistance (10) étant fixé au moteur principal (9), le dispositif propulsif (21) étant relié mécaniquement audit arbre de transmission arrière (7) par l'intermédiaire d'un boîtier de transmission (22).

2. Système (8) selon la revendication1, **caractérisé en ce que** ledit boîtier de transmission (22) comprend un premier réducteur (28) et/ou une première roue libre (29) configurée pour transmettre la puissance générée par ledit dispositif propulsif (21) audit arbre de transmission arrière (7).

3. Système (8) selon l'une des revendications 1 à 2, **caractérisé en ce que** ledit boîtier de transmission (22) comprend des moyens de mesure de la vitesse de rotation dudit dispositif propulsif (21) et/ou dudit arbre de transmission arrière (7).

4. Système (8) selon les revendications 1 à 3, **caractérisé en ce que** ledit boîtier de transmission (22) comprend les interfaces suivantes :
• une première interface (23) couplée au dispositif propulsif (21) ;
• une deuxième interface (24) couplée à une première portion (25) dudit arbre de transmission arrière (7), ladite première portion (25) étant liée mécaniquement au moteur principal (9) ;
• une troisième interface (26) couplée à une seconde portion (27) dudit arbre de transmission arrière (7), ladite seconde portion (27) étant liée mécaniquement à ladite BTA (6).

5. Système (8) selon la revendication 4, **caractérisé en ce que** ladite première portion (25) dudit arbre de transmission arrière (7) est liée à une seconde roue libre (14) relié à un second réducteur (13) qui est lui-même connecté mécaniquement audit moteur principal (9).

6. Système (8) selon l'une des revendications précédentes, **caractérisé en ce que** le moteur principal (9) est un moteur à combustion interne, et de préférence un turbomoteur.

7. Hélicoptère (1) comprenant un système propulsif (8) selon l'une des revendications précédentes.

## Patentansprüche

1. Antriebssystem (8) für einen Einzelmotorhelikopter (1), umfassend:
- einen Hauptmotor (9), der mit einer vorderen Getriebewelle (5) und einer hinteren Getriebewelle (7) des Antriebssystems (8) verbunden ist, wobei die vordere und die hintere Getriebewelle (5, 7) geeignet sind, ein als BTP (4) bezeichnetes Hauptgetriebegehäuse (4) bzw. ein als BTA (6) bezeichnetes hinteres Getriebegehäuse (6) anzutreiben;
- eine Hilfsvorrichtung (10), umfassend eine Antriebsvorrichtung (21), die pyrotechnische und/oder elektrotechnische und/oder elektrische und/oder hydraulische und/oder pneumatische Mittel umfasst;
**dadurch gekennzeichnet, dass** das Antriebssystem (8) so konfiguriert ist, dass die Hilfsvorrichtung (10) das BTA und BTP (6, 4) durch Einbringung von Leistung auf die hintere Getriebewelle (7) antreiben kann, wobei die Hilfsvorrichtung (10) am Hauptmotor (9) befestigt ist, wobei die Antriebsvorrichtung (21) über ein Getriebegehäuse (22) mechanisch mit der hinteren Antriebswelle (7) verbunden ist.

2. System (8) nach Anspruch 1, **dadurch gekennzeichnet, dass** das Getriebegehäuse (22) ein erstes Untersetzungsgetriebe (28) und/oder ein erstes freies Rad (29) umfasst, das konfiguriert ist, um die von der Antriebsvorrichtung (21) erzeugte Leistung an die hintere Getriebewelle (7) zu übertragen.

3. System (8) nach einem der Ansprüche 1 bis 2, **dadurch gekennzeichnet, dass** das Getriebegehäuse (22) Mittel zum Messen der Drehgeschwindigkeit der Antriebsvorrichtung (21) und/oder der hinteren Antriebswelle (7) umfasst.

4. System (8) nach einem der Ansprüche 1 bis 3, **dadurch gekennzeichnet, dass** das Getriebegehäuse (22) die folgenden Schnittstellen umfasst:
- eine erste Schnittstelle (23), die mit der Antriebsvorrichtung (21) gekoppelt ist;
- eine zweite Schnittstelle (24), die mit einem ersten Abschnitt (25) der hinteren Getriebewelle (7) verbunden ist, wobei der erste Abschnitt (25) mechanisch mit dem Hauptmotor (9) verbunden ist;
- eine dritte Schnittstelle (26), die mit einem zweiten Abschnitt (27) der hinteren Getriebewelle (7) verbunden ist, wobei der zweite Abschnitt (27) mechanisch mit dem BTA (6) verbunden ist.

5. System (8) nach Anspruch 4, **dadurch gekennzeichnet, dass** der erste Abschnitt (25) der hinteren Getriebewelle (7) mit einem zweiten freien Rad (14) verbunden ist, das mit einem zweiten Untersetzungsgetriebe (13) verbunden ist, das wiederum mechanisch mit dem Hauptmotor (9) verbunden ist.

6. System (8) nach einem der vorstehenden Ansprüche, **dadurch gekennzeichnet, dass** der Hauptmotor (9) ein Verbrennungsmotor und vorzugsweise ein Turbomotor ist.

7. Helikopter (1), der ein Antriebssystem (8) nach einem der vorstehenden Ansprüche umfasst.

## Claims

1. Propulsion system (8) of a single-engine helicopter (1) comprising:
• a main engine (9) connected to a front drive shaft (5) and a rear drive shaft (7) of the propulsion system (8), the front and rear drive shafts (5, 7) being respectively able to drive a main gearbox (4) referred to as MGB (4) and a rear gearbox (6) referred to as RGB (6);
• an assistance device (10) comprising a propulsion device (21) which comprises pyrotechnical and/or electro-technical and/or electric and/or hydraulic and/or pneumatic means;
**characterised in that** said propulsion system (8) is configured so that the assistance device (10) can mechanically drive said RGB and MGB (6, 4) by introducing power on said rear drive shaft (7), said assistance device (10) being secured to the main engine (9), the propulsion device (21) being mechanically connected to the rear drive shaft (7) by means of a gearbox (22).

2. System (8) according to claim 1, **characterised in that** said gearbox (22) comprises a first reduction gear (28) and/or a first freewheel (29) configured to transmit the power generated by said propulsion device (21) to said rear drive shaft (7).

3. System (8) according to any of claims 1 to 2, **characterised in that** said gearbox (22) comprises means to measure the rotational speed of said propulsion device (21) and/or of said rear drive shaft (7).

4. System (8) according to claims 1 to 3, **characterised in that** said gearbox (22) comprises the following interfaces:
• a first interface (23) coupled to the propulsion device (21);
• a second interface (24) coupled to a first portion (25) of said rear drive shaft (7), said first portion (25) being mechanically connected to the main engine (9);
• a third interface (26) coupled to a second portion (27) of said rear drive shaft (7), said second portion (27) being mechanically connected to said RGB (6).

5. System (8) according to claim 4, **characterised in that** said first portion (25) of said rear drive shaft (7) is connected to a second freewheel (14) connected to a second reduction gear (13), said second reduction gear being mechanically connected to said main engine (9).

6. System (8) according to any of the preceding claims, **characterised in that** the main engine (9) is an internal combustion engine, and preferably a turboshaft engine.

7. Helicopter (1) comprising a propulsion system (8) according to any of the preceding claims.
